# EUROPEAN PATENT APPLICATION

(11) **EP 1 702 510 A1**
(43) Date of publication of application: **20.09.2006**
(21) Application number: 05027395.2
(22) Date of filing: 14.12.2005
(51) Int. Cl.: A01K 23/00

(54) **"Device for collecting discharge of animal"**

(30) Priority: 14.03.2005 CN 200510033653; 14.03.2005 CN 200510033655
(71) Applicant: Tseng, Tien-Szu, Dali City T'ai chung County 412 (TW)
(72) Inventor: Tseng, Tien-Szu, Dali City T'ai chung County 412 (TW)
(74) Representative: Viering, Hans-Martin

(57) **Abstract**

A collecting device (1) includes a discharge collecting member (40) having a bottom board (41) and a bellows member (42) attached on top of the bottom board (41), and having an expandable chamber (44) formed in the bellows member (42) and enlargeable for receiving and collecting discharge (92) of an animal. An attaching device (30) may attach the discharge collecting member (40) to buttocks portion of the animal, and includes a base member (31) having a retaining member (38) for attaching the discharge collecting member (40). A chamber pot (60) may be attached to the attaching member for collecting piss. A wearing device (10) may be attached to the animal for coupling to the attaching device (30).

## Description

### BACKGROUND OF THE INVENTION

### 1. Field of the Invention

The present invention relates to a collecting device, and more particularly to a collecting device for attaching onto a pet or animal, such as dog, cat, or the like, and for easily collecting discharge or excrement or shit and/or piss of the animal without contacting with the animal.

### 2. Description of the Prior Art

Raising pets or animals have been popular worldwide for a long time, and people who raise the pets or animals have to take or lead the pets or animals outdoors everyday for discharging purposes. Normally, the raisers have to prepare bags and/or pinches or the like for taking or collecting the discharge or excrement discharged from the pets or animals.

Normally, the discharge or excrement from dogs is hard or solid, and the hard discharge or excrement may be easily collected by the raisers. However, for those soft or pasty discharge or excrement, it will be difficult to collect or to remove the same from the ground, and it is always a problem for the raisers to collect the discharge from the pets or animals.

In addition, normally, the pets or animals will directly piss onto the ground and the piss may not be easily collected. Some responsible raisers may prepare a pan or the like to collect the piss while pissing. However, it is inconvenient or difficult to directly collect the piss.

The present invention has arisen to mitigate and/or obviate the afore-described disadvantages of the conventional discharge or excrement collecting problems.

### SUMMARY OF THE INVENTION

The primary objective of the present invention is to provide a collecting device for readily attaching onto a pet or animal, such as dog, cat, or the like, and for easily collecting discharge or excrement or shit or piss of the animal without contacting with the animal.

The other objective of the present invention is to provide a collecting device for solidly attaching onto a pet or animal and for allowing the discharge or excrement or shit or piss of the animal to be easily or automatically collected without contacting with the discharge or excrement or shit or piss of the animal.

In accordance with one aspect of the invention, there is provided a collecting device comprising a discharge collecting member including a bottom board and a bellows member attached on top of the bottom board, and including an expandable chamber formed in the bellows member and enlargeable for receiving and collecting discharge of an animal.

The discharge collecting member includes a releasing paper attached to top of the bottom board, and includes an upper ring secured on top of the bellows member, and includes a fastening device attached to top of the upper ring for allowing the upper ring to be folded and secured together to enclose the chamber of the discharge collecting member and to retain and confine the discharge within the chamber of the discharge collecting member.

An attaching device may further be provided for attaching the discharge collecting member to buttocks portion of the animal. The attaching device includes a base member for attaching to the buttocks portion of the animal and for supporting the discharge collecting member. The base member includes a retaining member attached thereto for attaching the discharge collecting member to the base member.

The base member includes an opening formed therein for aligning with an anus of the animal, and includes a notch formed therein for aligning with a tail portion of the animal, and includes at least one attaching member attached thereto for attaching to the buttocks portion of the animal.

A chamber pot may further be provided and attached to the attaching member for collecting piss, and includes one or more fastening flaps for attaching or securing to the attaching member, and includes a spongy member engaged in a compartment for receiving or absorbing urine from the animal, and includes an inlet formed and defined by two side walls and a front wall for aligning and for receiving the urethra of the animal and thus for receiving urine from the animal. The chamber pot may include one or more indicating lines for indicating whether the spongy member is filled with the urine or not.

A wearing device may further be provided for attaching onto the animal and for coupling to the attaching device. The wearing device includes at least one longitudinal member and at least one loop member for attaching onto the animal, and includes an extension extended from the longitudinal member for coupling to the attaching device, and includes at least one buckle attached to the loop member, and includes a container attached thereon for receiving various objects, and includes at least one pad attached to an inner portion thereof for comfortably engaging onto the animal and for forming at least one air circulation passage.

Further objectives and advantages of the present invention will become apparent from a careful reading of the detailed description provided hereinbelow, with appropriate reference to the accompanying drawings.

### BRIEF DESCRIPTION OF THE DRAWINGS

FIG. 1 is a perspective view illustrating an attachment of a collecting device in accordance with the present invention onto a pet or a dog;
FIG. 2 is a partial exploded view of the discharge collecting device;
FIG. 3 is a partial cross sectional view of the collecting device taken along lines 3-3 of FIG. 1;
FIG. 4 is an enlarged partial cross sectional view of the collecting device;
FIG. 5 a partial exploded view of the discharge collecting device;
FIG. 6 another partial exploded view of the discharge collecting device;
FIG. 7 a further partial exploded view of the discharge collecting device;
FIG. 8 a still further partial exploded view illustrating the other arrangement of the discharge collecting device;
FIG. 9 a perspective view illustrating the arrangement of the discharge collecting device as shown in FIG. 8;
FIG. 10 is a partial cross sectional view of the collecting device taken along lines 10-10 of FIG. 5;
FIG. 11 is a perspective view illustrating a discharge collecting member of the collecting device;
FIG. 12 is a perspective view illustrating an extending or expanding position of the discharge collecting member of the collecting device;
FIG. 13 an exploded view of the discharge collecting member of the collecting device;
FIGS. 14, 15 are perspective views similar to FIG. 11, illustrating the operation of the discharge collecting member;
FIG. 16 is a perspective view similar to FIG. 1, illustrating the operation of the discharge collecting device;
FIG. 17 is a partial exploded view similar to FIG. 2, illustrating the other arrangement of the discharge collecting device;
FIG. 18 is a partial exploded view similar to FIG. 7, illustrating the other arrangement of the discharge collecting device;
FIG. 19 is a partial cross sectional view of the collecting device similar to FIGS. 17 and 18;
FIGS. 20, 21 are perspective views illustrating two examples of the discharge collecting member;
FIG. 22 is a partial exploded view similar to FIG. 18, illustrating the further arrangement of the discharge collecting device;
FIG. 23 is a partial exploded view similar to FIGS. 18, 22, illustrating the still further arrangement of the discharge collecting device;
FIGS. 24, 25 are partial cross sectional views similar to FIG. 3, illustrating the operation of the collecting device;
FIG. 26 is an enlarged partial cross sectional view of the collecting device as shown in FIG. 25;
FIGS. 27, 28 are enlarged cross sectional views illustrating the operation of the discharge collecting member of the collecting device;
FIG. 29 is a partial cross sectional view of the collecting device taken along lines 29-29 of FIG. 6;
FIG. 30 is a partial exploded view illustrating the still further arrangement of the discharge collecting device;
FIG. 31 is an upper perspective view illustrating a girth of the discharge collecting device as shown in FIG. 30;
FIG. 32 is a partial exploded view of the girth of the discharge collecting device as seen from the bottom portion of the girth;
FIG. 33 is a partial cross sectional view of the collecting device taken along lines 33-33 of FIG. 34;
FIG. 34 is a partial cross sectional view of the collecting device taken along lines 34-34 of FIG. 33; and
FIG. 35 is a partial exploded view similar to FIG. 30, illustrating the still further arrangement of the discharge collecting device.

### DETAILED DESCRIPTION OF THE PREFERRED EMBODIMENT

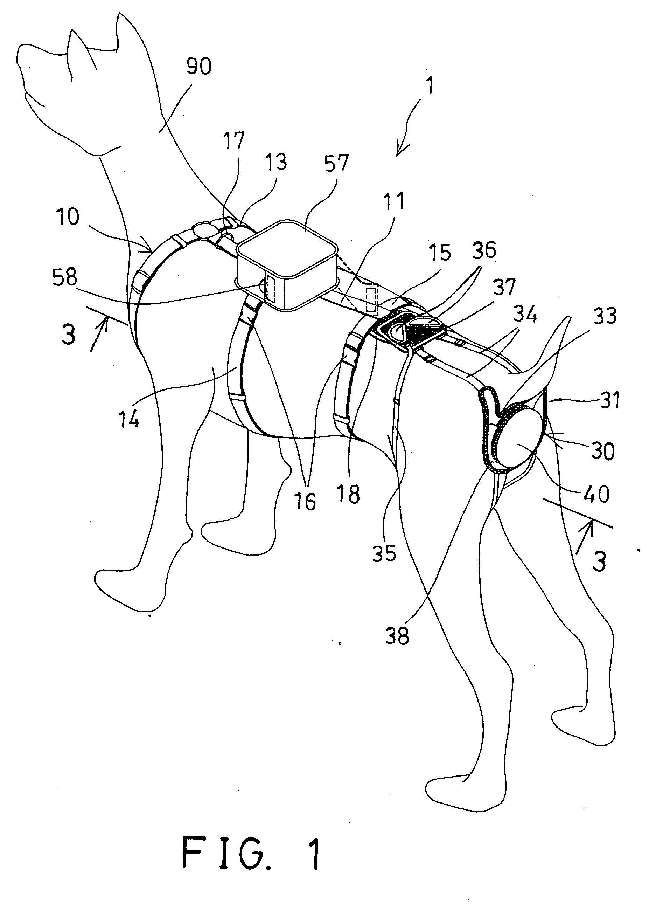

Referring to the drawings, and initially to FIGS. 1-3 and 5, a collecting device 1 in accordance with the present invention comprises a girth or cinch or wearing device 10 for attaching onto a pet or animal 90 and including one or more, such as two longitudinal strap members 11, 12, and one or more, such as three loop members 13, 14, 15 attached to or coupled to such as the front portion, the middle portion and/or the rear portion of the upper and the lower longitudinal members 11, 12, for forming a spatial structure and for attaching onto such as the neck portion and the breast portion and the abdominal portion of the pet or animal 90 respectively.

The loop members 14, 15, and/or 13 and/or the longitudinal members 11, 12, may each include one or more buckles or fastening members 16 provided therein for allowing the loop members 13, 14, 15, and the longitudinal members 11, 12 to be detachably coupled together, and for allowing the wearing device 10 to be easily or readily attached onto the pet or animal 90. A ring member 17 is attached or coupled to the front portion of the longitudinal member 11 for attaching such as a halter (not shown), which may be used to control the pet or animal.

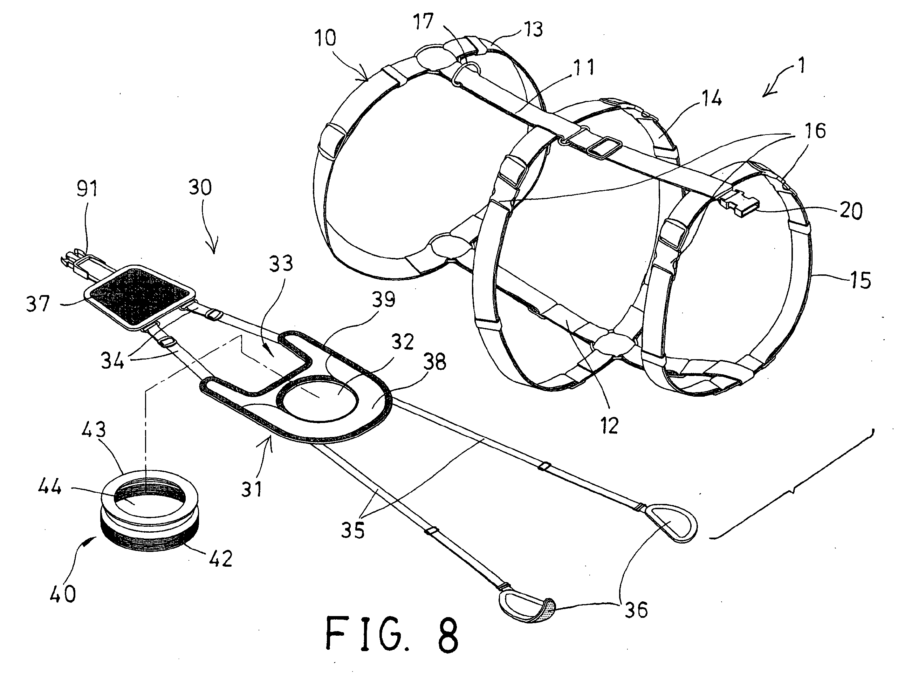

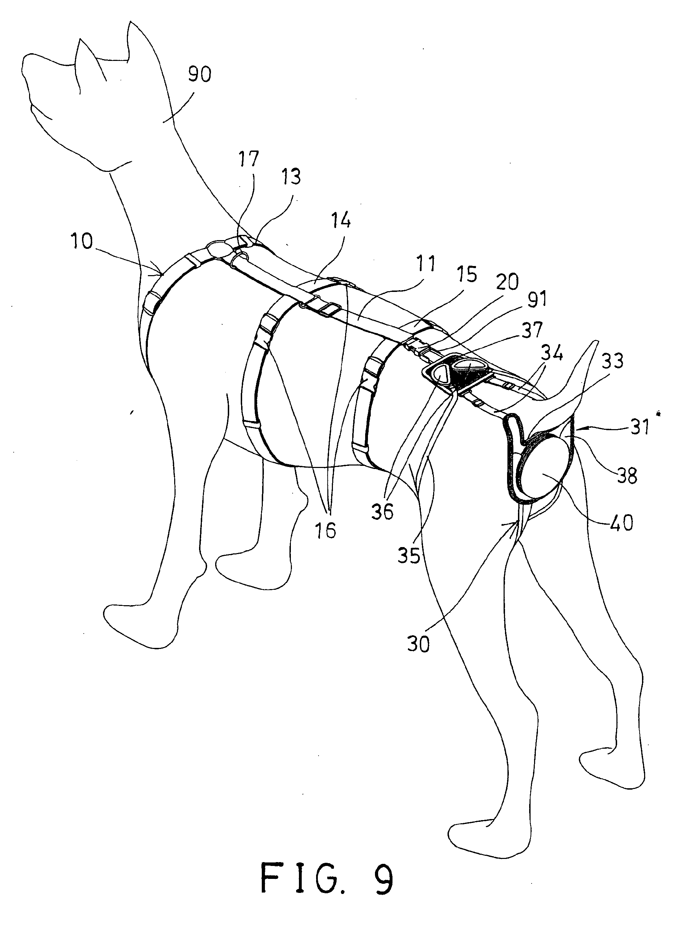

A flap or extension 18 may be extended from the rear portion of the longitudinal member 11 and having a hook and loop device 19 for coupling purposes. Alternatively, as shown in FIGS. 8 and 9, a buckle 20 or other fastening members 20 may be provided and attached to the rear portion of the longitudinal member 11 for coupling purposes, such as for coupling an attaching device 30 to the rear portion of the wearing device 10, or to the rear or buttocks portion of the pet or animal 90.

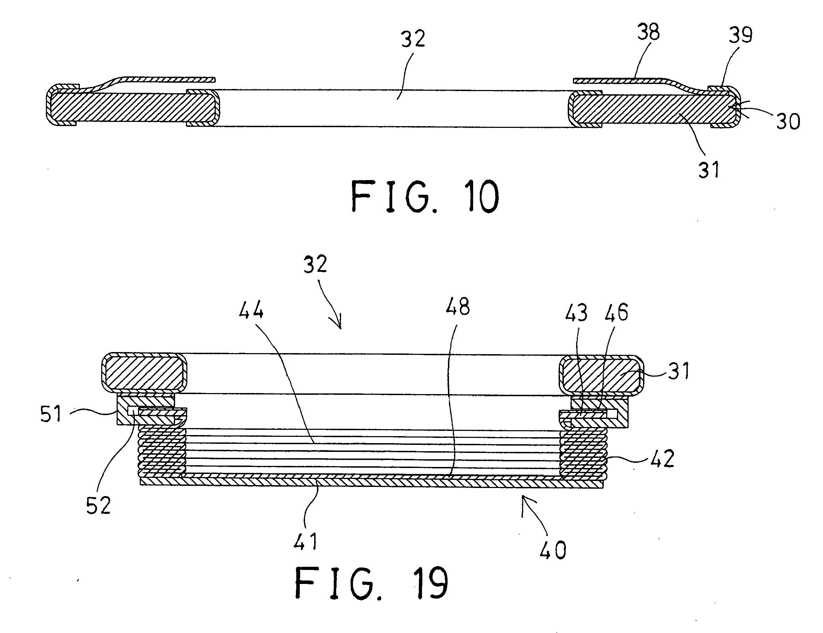

As shown in FIGS. 1-10, the attaching device 30 includes a soft or flexible base cloth member 31 for engaging onto the buttocks portion of the pet or animal 90, and having an opening 32 formed therein for aligning with the anus of the pet or animal 90, and having a notch 33 formed therein for aligning with or for receiving the tail portion of the pet or animal 90. One or more, such as two upper attaching strap members 34, and one or more, such as two lower attaching strap members 35 may be attached to or coupled to the base member 31 for attaching the attaching device 30 onto the buttocks portion of the pet or animal 90. The attaching strap members 34, 35 are preferably made of resilient and flexible strap materials.

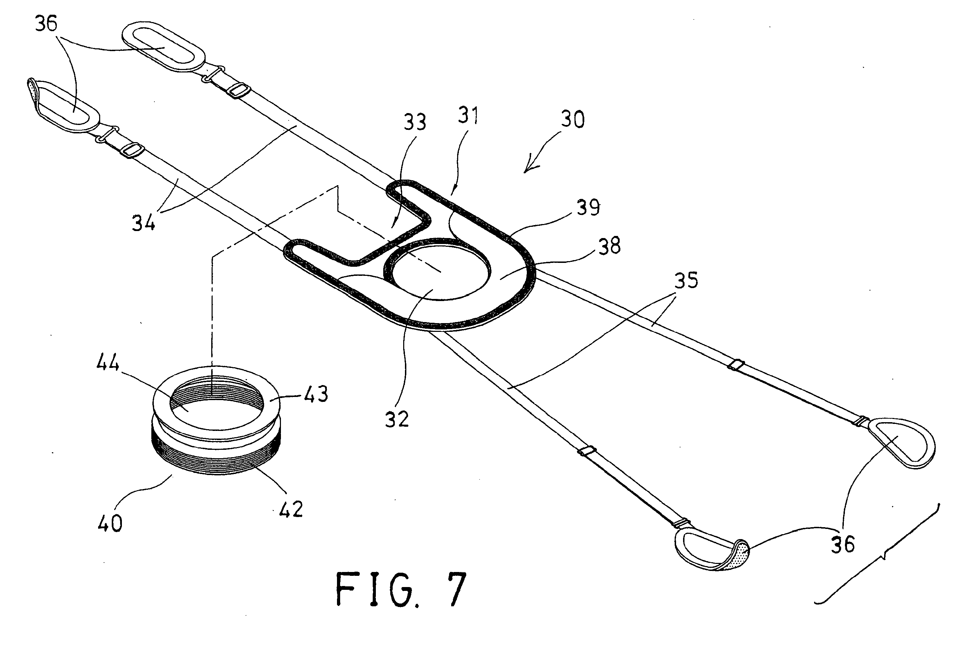

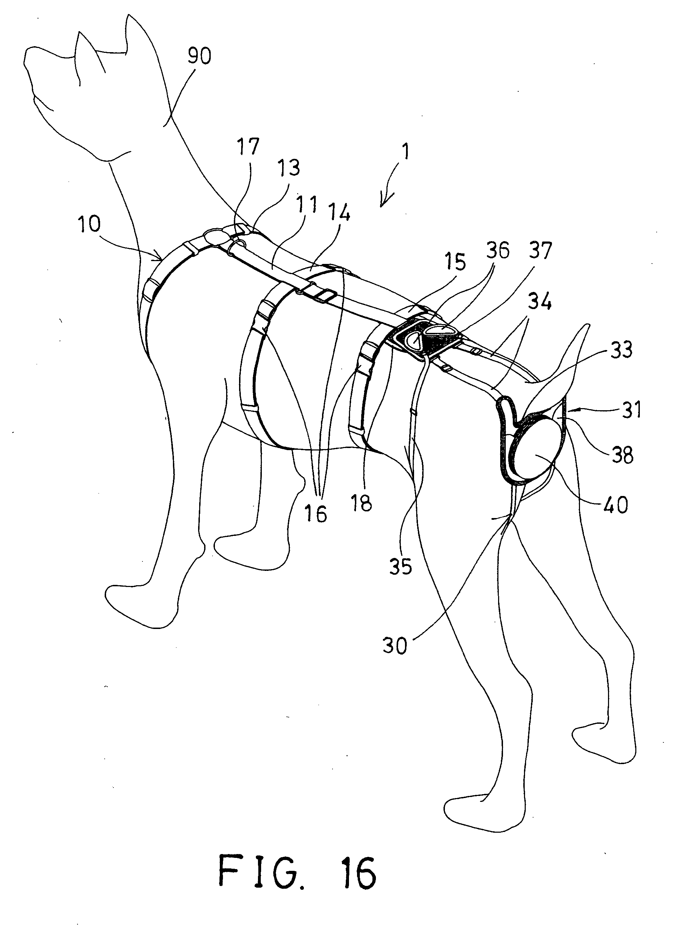

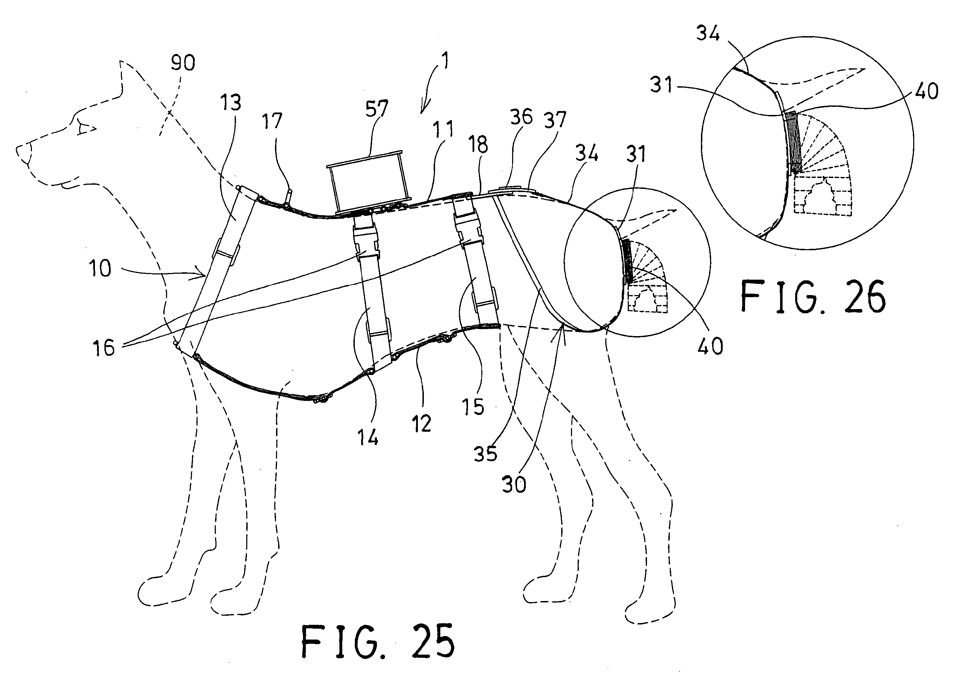

For example, the upper attaching strap members 34 and/or the lower attaching strap members 35 may each include a hook and loop device 36 or other coupling device 36 attached to the free end portion thereof (FIGS. 7, 18, 22) for attaching or coupling to the extension 18 of the wearing device 10 and for attaching or coupling the attaching device 30 to the wearing device 10. Alternatively, the free end portions of the upper attaching strap members 34 may be coupled together with another hook and loop or coupling device 37 for attaching or coupling to the extension 18 of the wearing device 10 and for attaching or coupling the attaching device 30 to the wearing device 10 (FIGS. 1-3, 9, 16-17, 24-25).

Alternatively, as shown in FIGS. 8-9, the attaching device 30 may further include a buckle or fastening member 91 attached to the free end portions of the upper attaching strap members 34 for coupling to the corresponding buckle or fastening member 20 of the wearing device 10, and also for attaching or coupling the attaching device 30 to the wearing device 10. The attaching device 30 includes a U-shaped retaining member 38 attached to or coupled to the base member 31 for attaching or supporting a discharge collecting member 40 which is preferably made of water proof materials and/or decomposable materials.

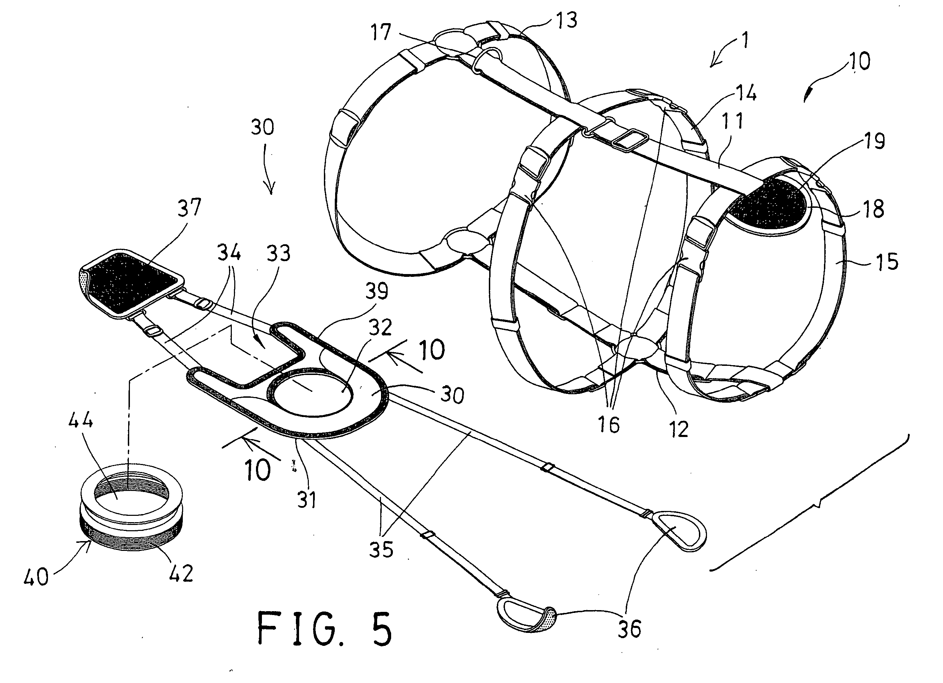

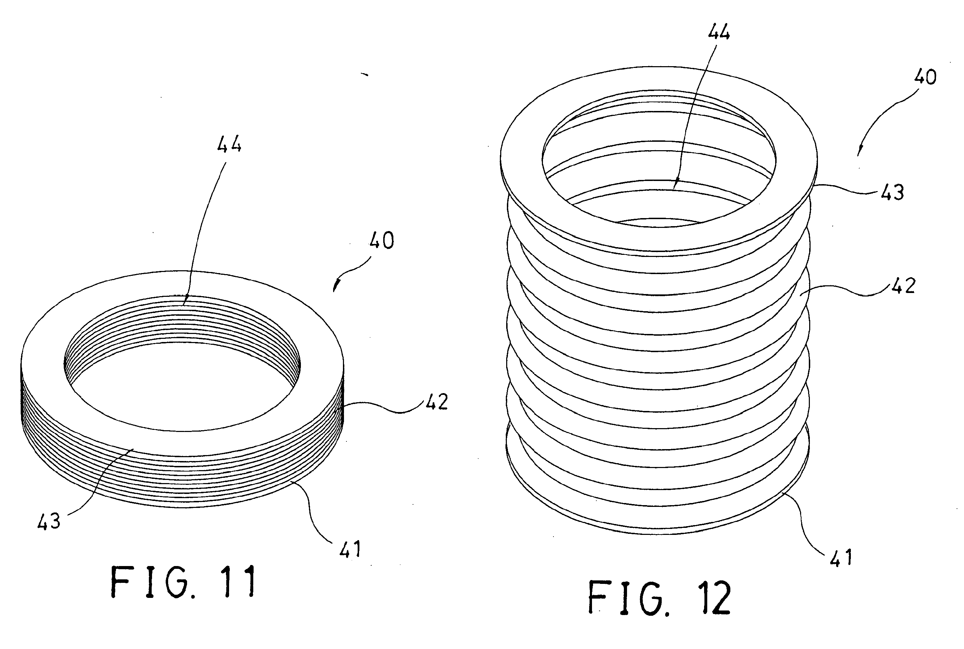

For example, as shown in FIGS. 1-2, 5-10, 16, the U-shaped retaining member 38 may be directly secured to the base member 31 with such as adhesive materials, stitches (not shown), peripheral straps or hook and loop devices 39 (FIGS. 5-8, 10), or the like, for attaching or supporting the discharge collecting member 40. As shown in FIGS. 11-15, 27-28, the discharge collecting member 40 includes a bottom board 41, a bellows member 42 attached on top of the bottom board 41, and an upper ring 43 secured on top of the bellows member 41 for engaging with the retaining member 38 (FIGS. 1, 3-4, 9, 16, 24-26, 30, 35), and thus for detachably attaching the discharge collecting member 40 to the base member 31.

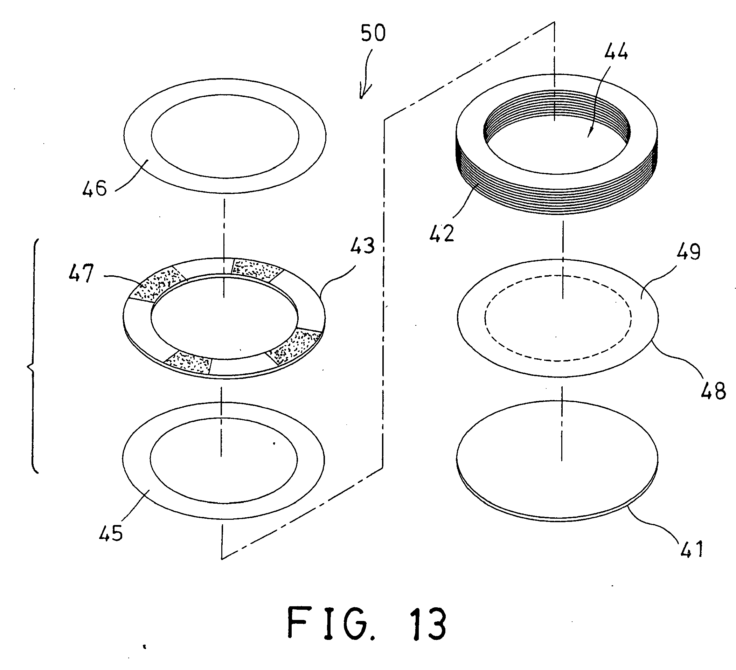

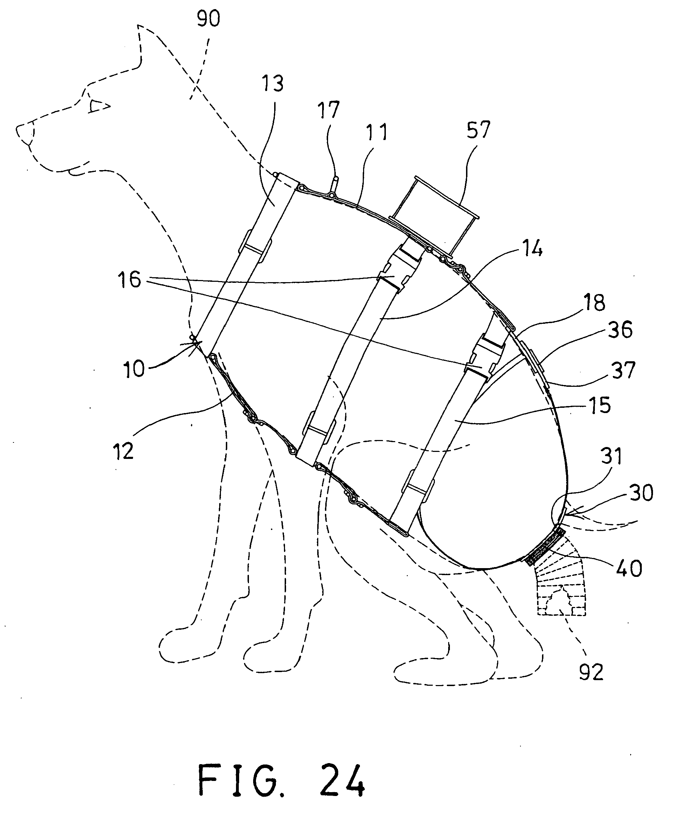

As also shown in FIGS. 11-15, 27-28, the discharge collecting member 40 includes a chamber 44 formed therein, particularly formed in the bellows member 42, and expandable or enlargeable for receiving the discharge 92 (FIGS. 24, 27-28) when the bellows member 42 is expanded or unfolded by such as the weight of the discharge 92. As shown in FIG. 13, a releasing paper 45 or the like may be attached to the bottom of the upper ring 43 where is applied with an adhesive material thereon. The adhesive material may be used to secure the upper ring 43 to the bellows member 42 when the releasing paper 45 is removed from the upper ring 43 of the discharge collecting member 40.

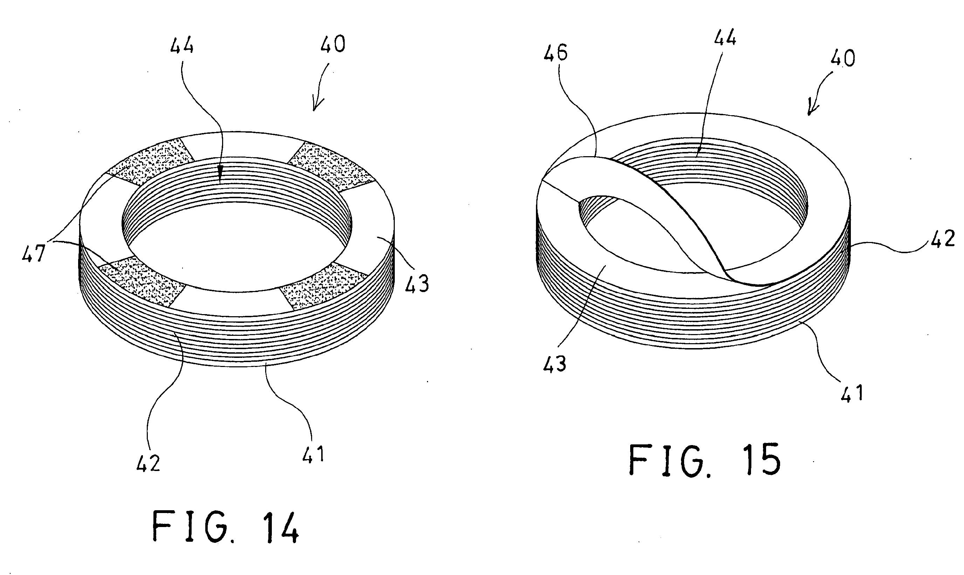

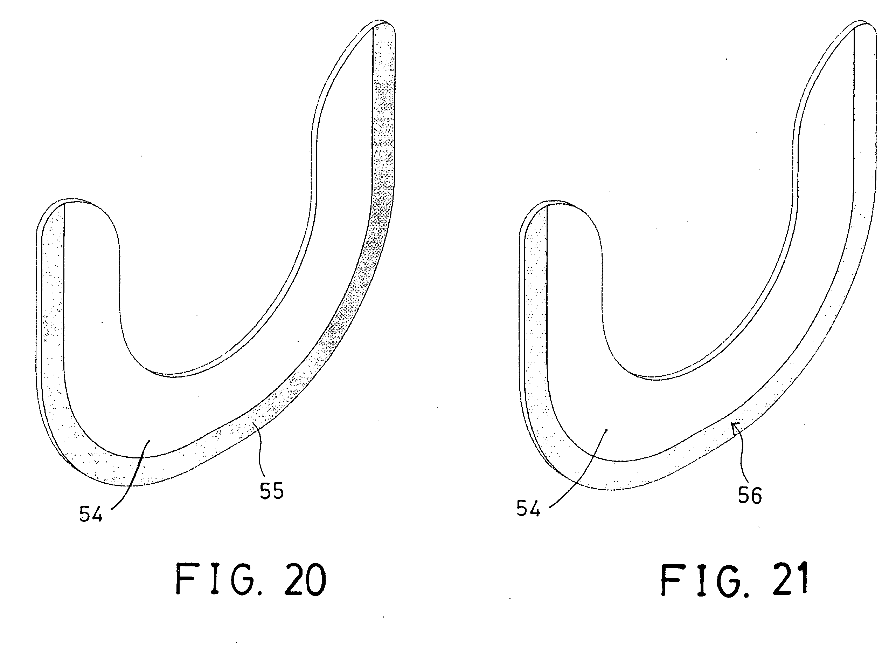

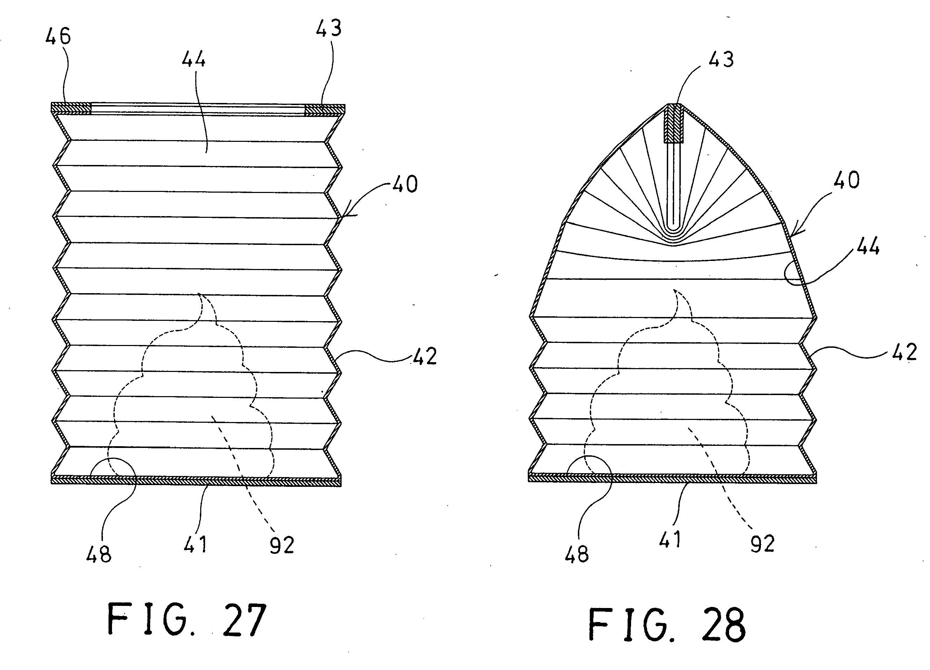

Another releasing paper 46 may further be attached to the upper portion of the upper ring 43 where is also applied with an adhesive material or fastening device or hook and loop device 47 (FIGS. 13-14) provided thereon, in order to cover or shield the adhesive material or fastening device . The releasing paper 46 may be used to prevent the upper ring 43 from being adhered or secured to the other objects (FIG. 19), and may also be selectively removed from the upper ring 43 (FIG. 15) for allowing the upper ring 43 to be selectively folded and adhered or secured together to enclose the chamber 44 of the discharge collecting member 40 (FIG. 28) and to sealingly retain and confine the discharge 92 within the chamber 44 of the discharge collecting member 40.

As shown in FIGS. 13 and 19, a further releasing paper 48 may further be attached to the upper portion of the bottom board 41 where is also applied with an adhesive material thereon and includes a peripheral portion 49 removable or detachable from the releasing paper 48 for allowing the bottom board 41 to be adhered or secured onto the bottom portion of the bellows member 42 (FIG. 19). The releasing paper 48 may be used to protect the upper portion of the bottom board 41 (FIGS. 27-28) and to prevent the bottom board 41 from being wetted and softened or damaged by the wet or soft discharge 92.

In operation, as shown in FIGS. 1, 3-4, 9, 16, the upper ring 43 of the discharge collecting member 40 may be engaged with the retaining member 38 for attaching the discharge collecting member 40 to the base member 31 and for aligning the chamber 44 of the discharge collecting member 40 with the opening 32 of the base member 31 of the attaching device 30, and for automatically or readily receiving and collecting the discharge 92 (FIGS. 24, 27-28) without contacting with the pet or animal and without scooping or collecting the discharge 92 manually. The attaching device 30 is formed and acted as a means for attaching the discharge collecting member 40 to the base member 31 of the attaching device 30, and then to the buttocks portion of the pet or animal 90.

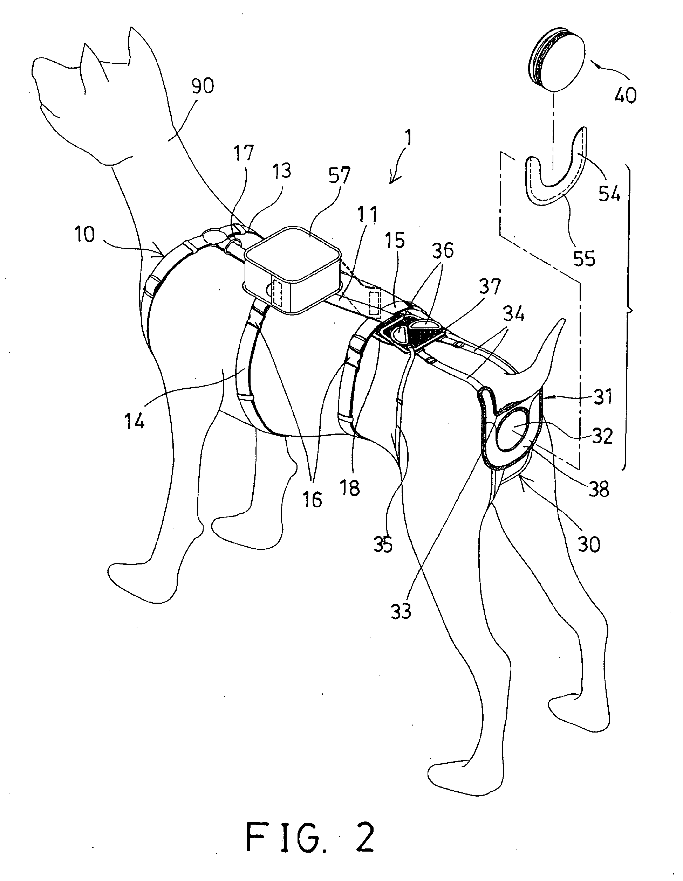

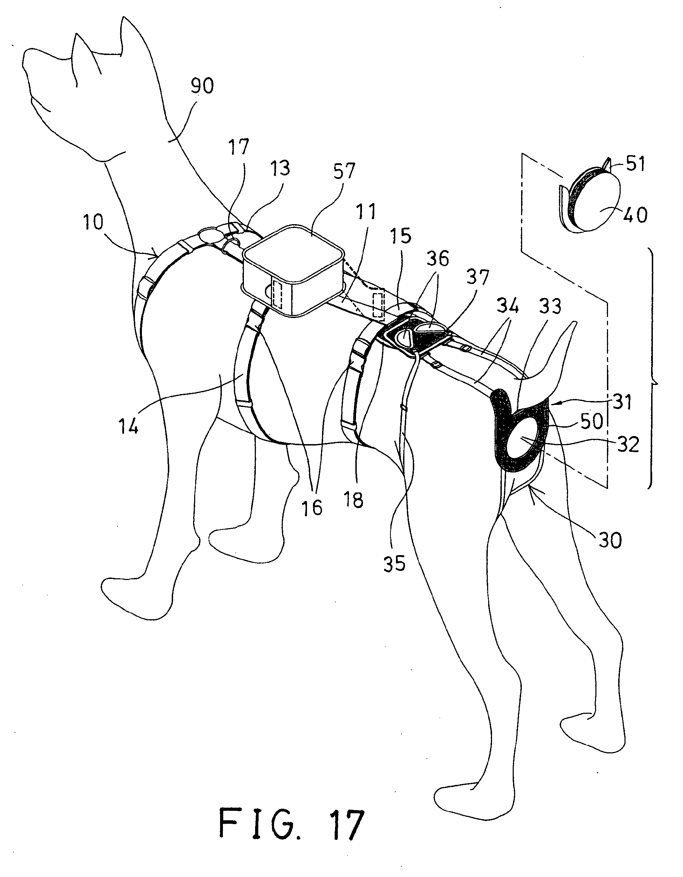

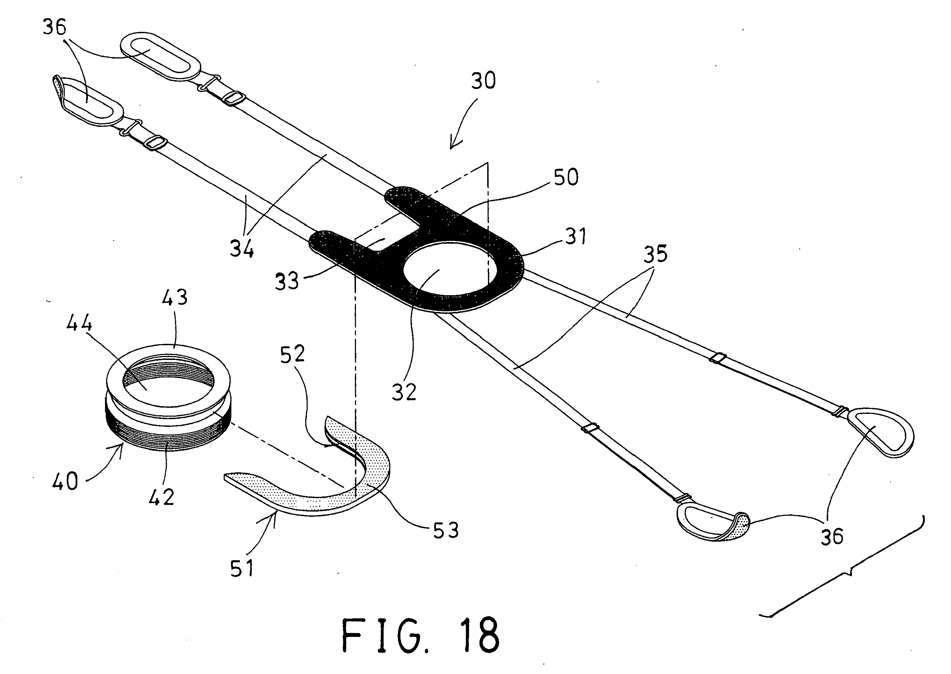

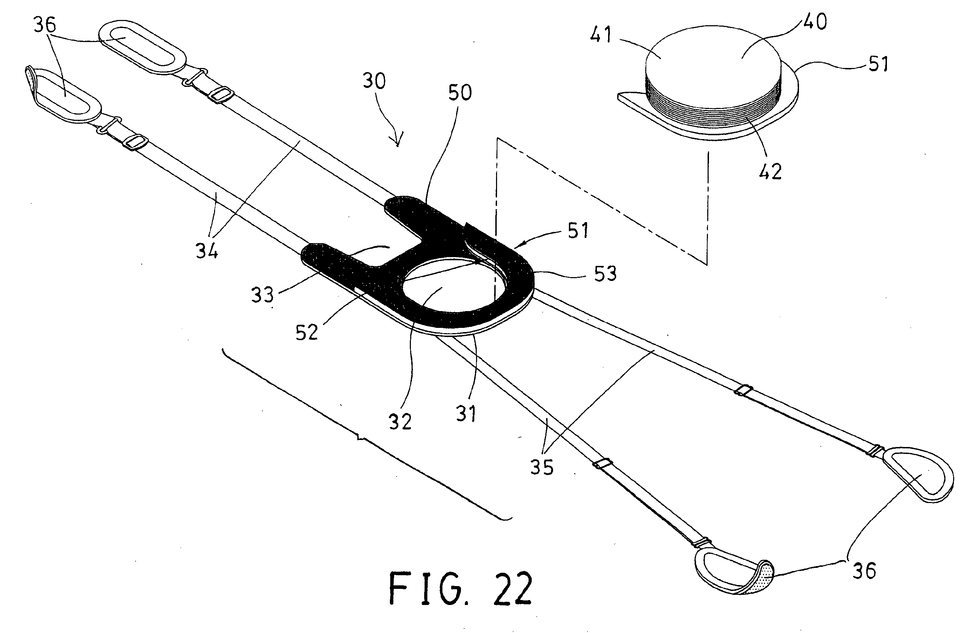

Alternatively, as shown in FIGS. 17-19, the attaching device 30 may include an adhesive material, a hook and loop device 50 or the like attached thereon for securing or attaching a U-shaped bracket 51 thereto, the bracket 51 includes a slot 52 formed therein for receiving and for engaging with the upper ring 43 and thus for attaching the discharge collecting member 40 to the base member 31. The bracket 51 may further include an adhesive material or another hook and loop device 53 or the like attached thereon for securing or attaching a further bracket 51 (FIG. 22), or a retaining member 54 (FIG. 20), in which the further retaining member 54 may include an adhesive material or another hook and loop device 55 or other securing devices (not shown) attached to the inner portion for securing or attaching onto the bracket 51 (FIG. 18), or the retaining member 38 (FIG. 2).

The further retaining member 54 may also be used for selectively receiving and for engaging with the upper ring 43 and thus for attaching the discharge collecting member 40 to the base member 31, and may include a further adhesive material or hook and loop device 56 or the like attached to the outer portion (FIG. 21) for securing or attaching the other brackets 51 or retaining members 54. As shown in FIGS. 1-3, 17, 24-25, a container 57 may further be provided and attached or secured onto such as the longitudinal strap members 11, 12 and/or the loop members 13, 14, 15 of the wearing device 10 for receiving various objects, such as spare brackets 51 and/or spare retaining members 54 and/or spare discharge collecting members 40 therein.

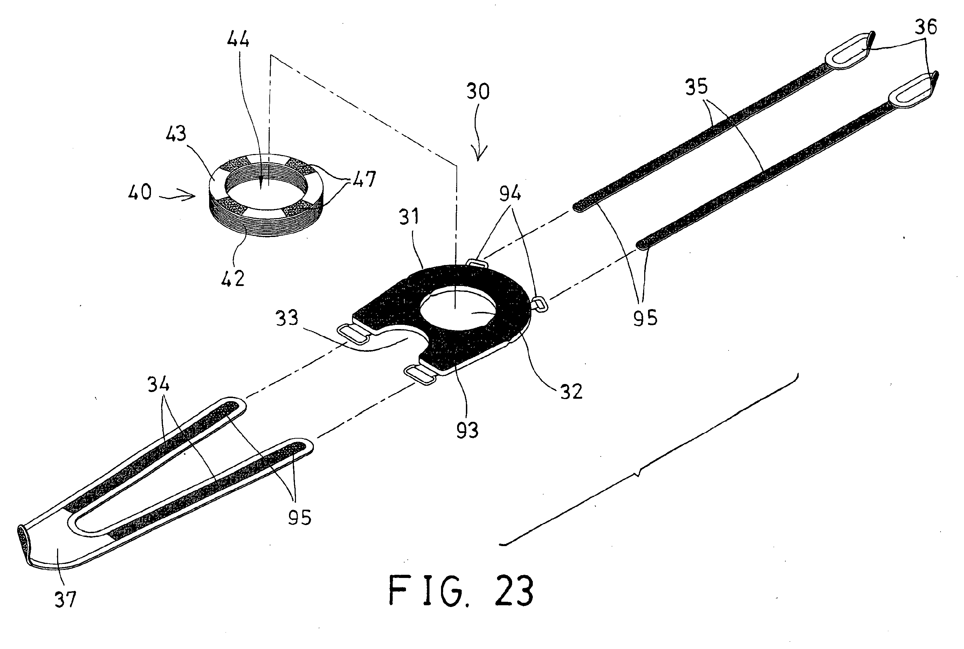

Referring next to FIG. 23, the base member 31 of the attaching device 30 may include an adhesive material, a hook and loop device 93 or the like attached thereon for securing or attaching the discharge collecting members 40 thereon, and may include one or more, such as four loops 94 attached thereto for engaging with and for attaching or securing the attaching strap members 34, 35 with such as adhesive materials or hook and loop devices 95 or the like, and thus for allowing the base members 31, the attaching strap members 34, 35 and the discharge collecting members 40 to be selectively assembled together.

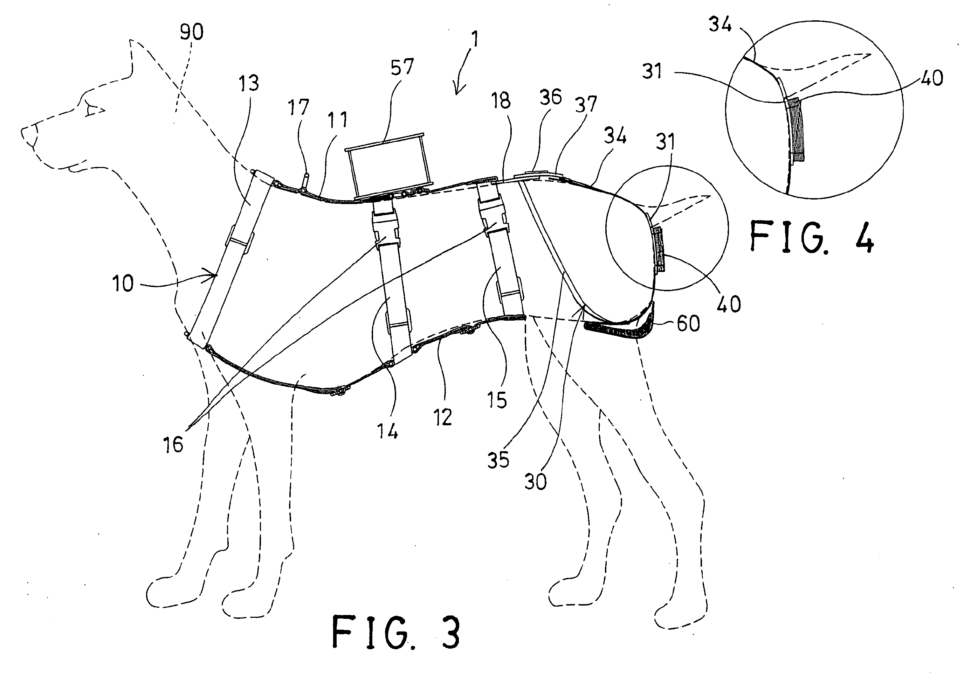

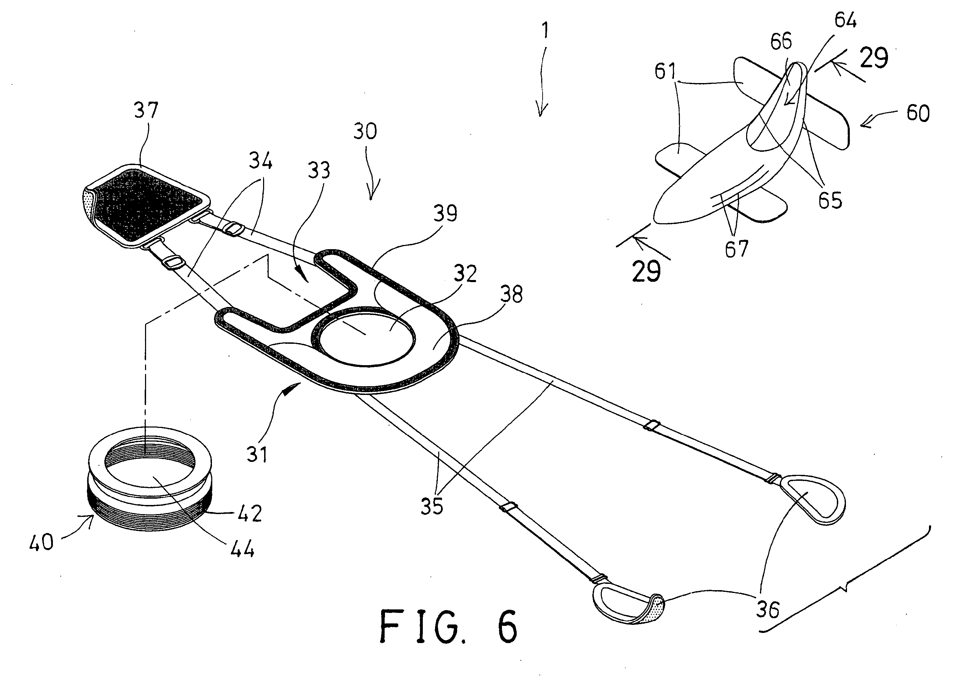

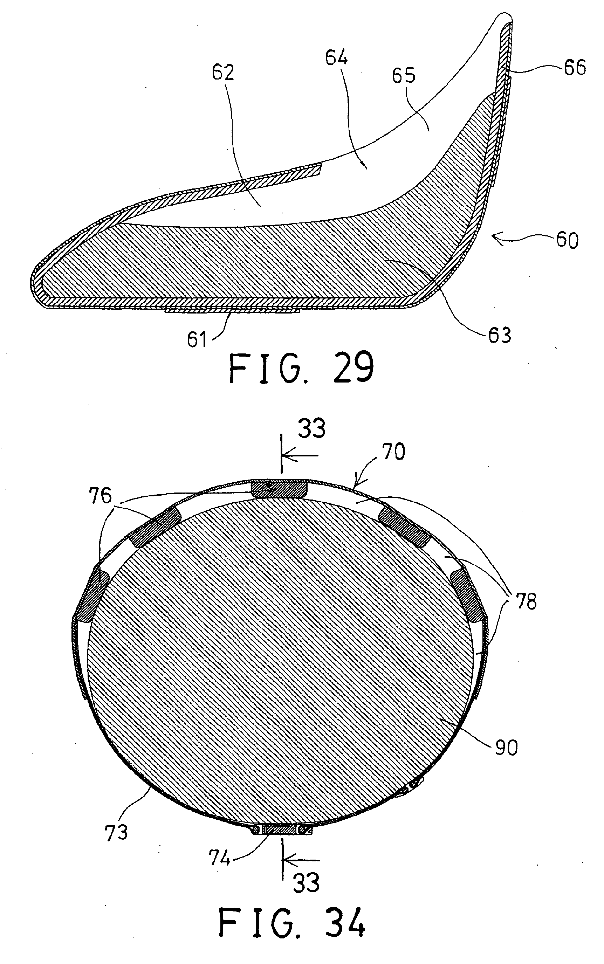

As shown in FIGS. 3, 6 and 29, a chamber pot 60 may further be provided and includes one or more fastening flaps 61 attached or secured thereto or extended therefrom for attaching or securing to the lower attaching strap members 35 with such as adhesive materials or hook and loop devices or the like, and includes a compartment 62 formed therein, and includes a spongy member 63 engaged in the compartment 62 thereof for receiving or absorbing urine from the pet or animal 90, and includes an inlet 64 formed and defined by two side walls 65 and a front wall 66 for aligning and for receiving the urethra of the pet or animal 90 and thus for receiving urine from the pet or animal 90. The chamber pot 60 may include one or more indicating lines 67 provided thereon (FIG. 6) for indicating whether the spongy member 63 is filled with the urine or not.

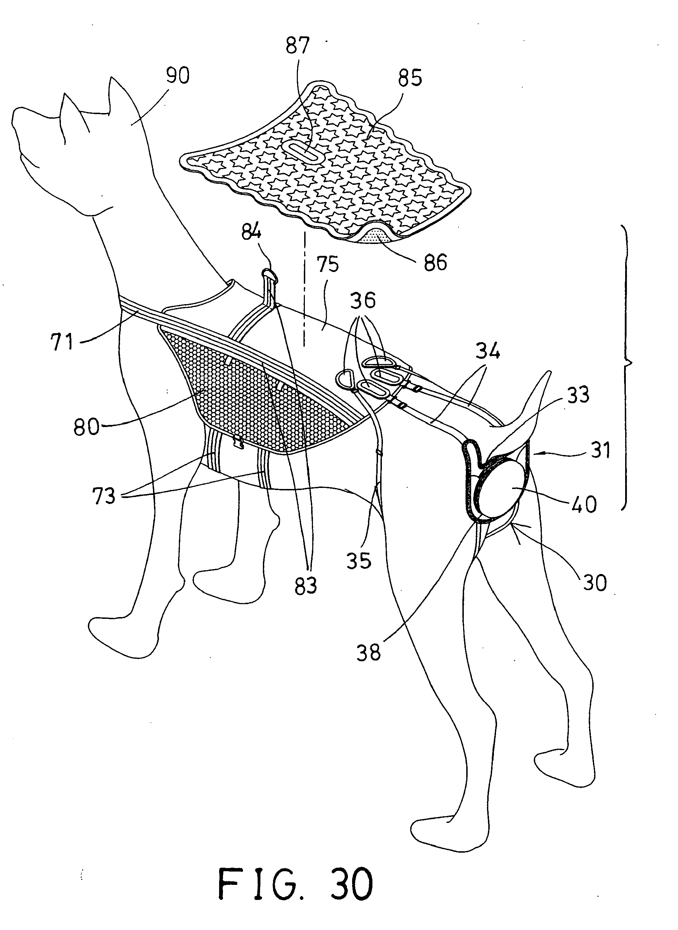

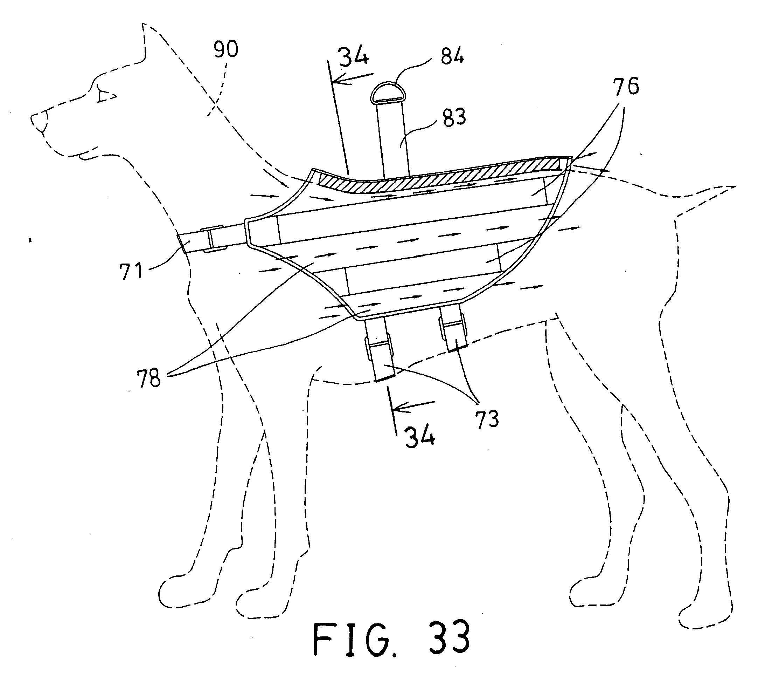

Referring next to FIGS. 30-35, alternatively, the wearing device 10 may include a soft cloth base member 70 for comfortably engaging into the pet or animal 90, and one or more longitudinal attaching strap members 71 attached or coupled to the base member 70 for attaching the wearing device 10 onto such as the neck portion of the pet or animal 90 with such as buckles 72, and one or more lateral attaching strap members 73 attached or coupled to the base member 70 for attaching the wearing device 10 onto such as the breast portion and/or the abdominal portion of the pet or animal 90 with such as buckles 74.

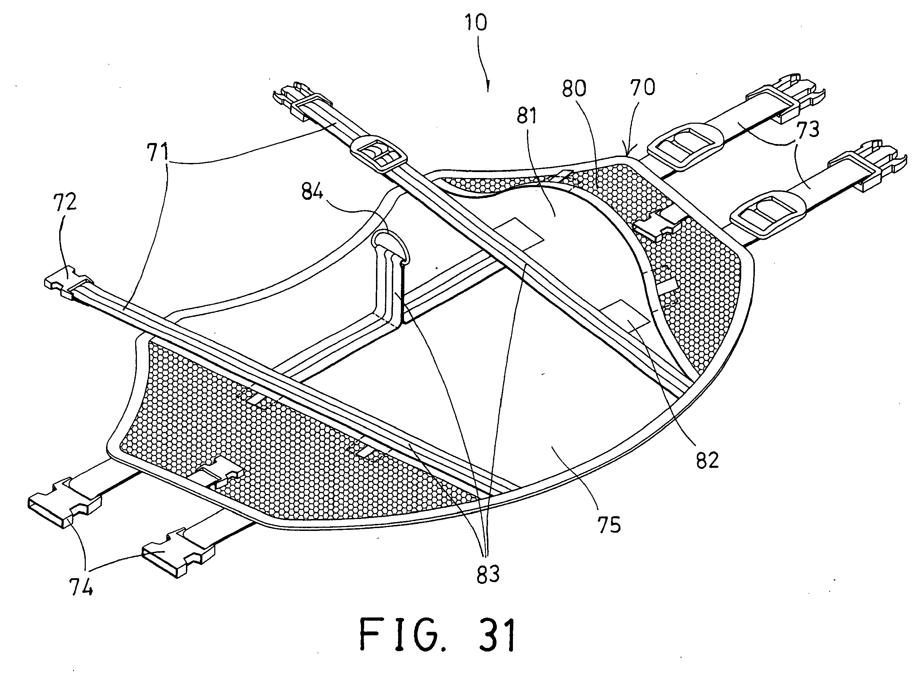

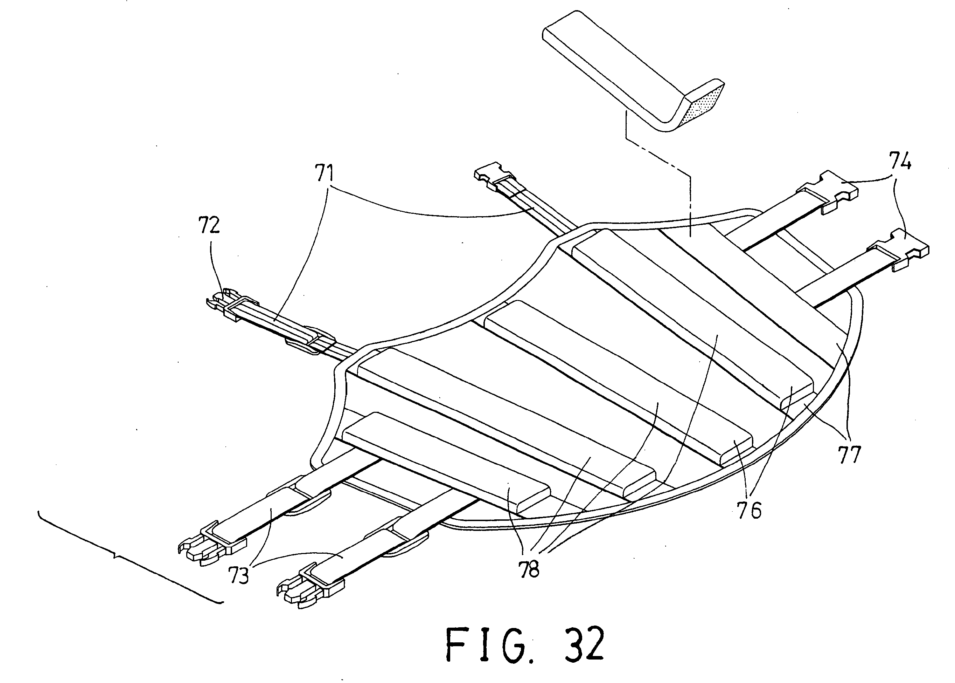

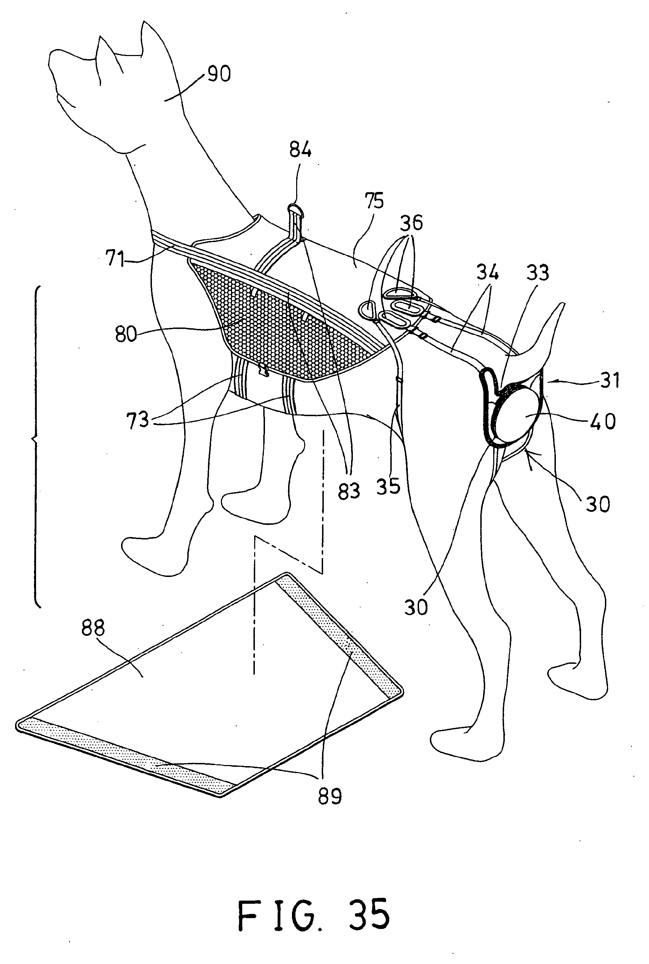

The cloth base member 70 may include an adhesive material, a hook and loop device 75 or the like attached thereon (FIG. 31) for engaging with and for securing or attaching the hook and loop device or other coupling devices 36 of the attaching strap members 34, 35 (FIGS. 30, 35), and for attaching or coupling the attaching device 30 to the wearing device 10. The cloth base member 70 further includes one or more soft pads 76 attached to the inner portion thereof (FIGS. 32, 34) with such as adhesive materials or hook and loop devices 77 (FIG. 32), or the like, for comfortably engaging into the pet or animal 90, and for forming or defining one or more air circulation passages 78 therein.

The wearing device 10 may further include one or more, such as two pockets 80 attached or provided on the upper portion of the soft cloth base member 70 (FIGS. 30, 31, 35), each of the pockets 80 includes a space 81 formed therein for receiving various objects therein, and engageable with the soft cloth base member 70 with such as adhesive materials or hook and loop devices 82 or the like (FIG. 31), for selectively enclosing the space 81 of the pocket 80. The wearing device 10 may further include one or more reflective strap members 83 attached onto the upper portion of the soft cloth base member 70 for light reflecting purposes.

The wearing device 10 may further include a ring member 84 attached to one of the strap members 83 for attaching such as a halter (not shown), which may be used to control the pet or animal, and may further include a further cloth member 85 selectively attached onto the upper portion of the soft cloth base member 70 with such as adhesive materials or hook and loop devices 86 or the like (FIG. 30) and having a slot 87 formed therein for selectively engaging the ring member 84 and the strap member 83 through the cloth member 85.

As shown in FIG. 35, a further cloth member 88 may further be provided and selectively attached onto the breast portion and/or the abdominal portion of the pet or animal 90 and coupled to the soft cloth base member 70 with such as adhesive materials or hook and loop devices 89 or the like for selectively engaging with and protecting the breast portion and/or the abdominal portion of the pet or animal 90. The wearing device 10 includes a discharge collecting member 40 for automatically or readily and selectively receiving the discharge 92, and includes a chamber pot 60 for automatically or readily and selectively receiving the urine from the pet or animal 90. The attaching device 30 may also be directly attached onto the pet or animal 90 with the hook and loop device or other coupling devices 36 of the attaching strap members 34, 35 without the wearing device 10.

Accordingly, the collecting device in accordance with the present invention may be provided for attaching onto the pet or animal, such as dog, cat, or the like, and for easily collecting discharge or excrement or shit or piss of the animal without contacting with the animal.

Although this invention has been described with a certain degree of particularity, it is to be understood that the present disclosure has been made by way of example only and that numerous changes in the detailed construction and the combination and arrangement of parts may be resorted to without departing from the spirit and scope of the invention as hereinafter claimed.

## Claims

1. A collecting device comprising:
a discharge collecting member including a bottom board and a bellows member attached on top of said bottom board, and including an expandable chamber formed in said bellows member and enlargeable for receiving and collecting discharge of an animal.

2. The collecting device as claimed in claim 1, wherein said discharge collecting member includes a releasing paper attached to top of said bottom board.

3. The collecting device as claimed in claim 1, wherein said discharge collecting member includes an upper ring secured on top of said bellows member.

4. The collecting device as claimed in claim 3, wherein said discharge collecting member includes a fastening device attached to top of said upper ring for allowing said upper ring to be folded and secured together to enclose said chamber of said discharge collecting member and to retain and confine the discharge within said chamber of said discharge collecting member.

5. The collecting device as claimed in claim 1 further comprising means for attaching said discharge collecting member to buttocks portion of the animal.

6. The collecting device as claimed in claim 5, wherein said attaching means includes a base member for attaching to the buttocks portion of the animal and for supporting said discharge collecting member.

7. The collecting device as claimed in claim 6, wherein said base member includes a retaining member attached thereto for attaching said discharge collecting member to said base member.

8. The collecting device as claimed in claim 6, wherein said base member includes an opening formed therein for aligning with an anus of the animal.

9. The collecting device as claimed in claim 6, wherein said base member includes a notch formed therein for aligning with a tail portion of the animal.

10. The collecting device as claimed in claim 6, wherein said base member includes at least one attaching member attached thereto for attaching to the buttocks portion of the animal.

11. The collecting device as claimed in claim 10 further comprising a chamber pot attached to said at least one attaching member for collecting piss.

12. The collecting device as claimed in claim 5 further comprising a wearing device for attaching onto the animal and for coupling to said attaching means.

13. The collecting device as claimed in claim 12, wherein said wearing device includes at least one longitudinal member and at least one loop member for attaching onto the animal.

14. The collecting device as claimed in claim 13, wherein said wearing device includes an extension extended from said at least one longitudinal member for coupling to said attaching means.

15. The collecting device as claimed in claim 13, wherein said wearing device includes at least one buckle attached to said at least one loop member.

16. The collecting device as claimed in claim 12, wherein said wearing device includes a container attached thereon for receiving various objects.

17. The collecting device as claimed in claim 12, wherein said wearing device includes at least one pad attached to an inner portion thereof for comfortably engaging onto the animal and for forming at least one air circulation passage.

18. A collecting device comprising:
a base member for engaging with buttocks portion of an animal, and including at least one attaching member attached thereto for attaching to the buttocks portion of the animal.

19. A collecting device comprising:
a chamber pot for attaching to the animal and for receiving urethra of the animal and for receiving urine from the animal.
